# EUROPEAN PATENT SPECIFICATION

(11) **EP 2 387 308 B1**
(45) Date of publication and mention of the grant of the patent: **28.02.2018**
(21) Application number: 10701194.2
(22) Date of filing: 15.01.2010
(51) Int. Cl.: A01N 25/08, A01N 25/34, A01N 25/28, B27K 3/00, B27K 3/52, C09D 5/14, C09D 7/12, C08K 3/36, C08K 9/12

(54) **A METHOD FOR THE PREPARATION OF PARTICLES FOR CONTROLLED RELEASE OF A BIOCIDE**
EINE METHPODE ZUR HERSTELLUNG VON PARTIKELN ZUR GESTEUERTEN ABGABE EINES BIOZIDS
PROCÉDÉ DE PRÉPARATION DES PARTICULES POUR LIBÉRATION CONTRÔLÉE D'UN BIOCIDE

(30) Priority: 16.01.2009 EP 09150746
(43) Date of publication of application: 23.11.2011
(73) Proprietor: VKR Holding A/S, 2970 Hørsholm (DK); Teknologisk Institut, 8000 Aarhus C (DK); Dyrup A/S, 2860 Söborg (DK)
(72) Inventor: POULSEN, Mikael, 8361 Hasselager (DK); NYGAARD, Sune, 8660 Skanderborg (DK)
(74) Representative: Awapatent A/S
(86) International application number: PCT/DK2010/050007
(87) International publication number: WO 2010/081480

(56) References cited:
- EP-A1- 0 758 633
- WO-A-01/62232
- WO-A-02/051517
- WO-A-2006/096544
- WO-A1-00/11949
- WO-A1-2005/110592
- WO-A1-2006/120135
- WO-A1-2006/133518
- WO-A2-03/105582
- DE-A1-102004 008 931
- US-A1- 2007 048 346
- US-B1- 6 258 857
- N.E.BOTTERHUIS ET AL: "Hollow Sillica Spheres with an Ordered Pore Structure and Their Application in Controlled Release Studies", CHEM. EUR.J., vol. 12, 2006, pages 1448-1456, XP002527387, cited in the application
- LI Z-Z ET AL: "Fabrication of porous hollow silica nanoparticles and their applications in drug release control", JOURNAL OF CONTROLLED RELEASE, ELSEVIER, AMSTERDAM, NL, vol. 98, no. 2, 11 August 2004 (2004-08-11), pages 245-254, XP004521714, ISSN: 0168-3659

## Description

The present invention relates to a method for the preparation of biocide particles for controlled release of a biocide. In particular, the invention relates to biocide particles comprising a shell of a ceramic material surrounding a hollow core containing the biocide, each shell allowing the biocide to migrate from the hollow core to the surroundings. The biocide particles of the present invention are useful for preserving wood or timber from fungal degradation and preserving coating films particular for use on mineral and wood substrates.

### Background

Timber is an important material for constructions and being a natural product of biological processes it is at risk of degradation by commonly occurring pests, such as fungi, insects or termites. There is therefore an interest and a correspondingly important market for products providing protection from such pests.

Pesticide formulations may be applied to wood or timber in numerous different ways. In the application of the pesticide it is advantageous if the active compound of the formulation will penetrate into the wood in order to yield a prolonged exposure of the chemical to pests, such as fungal spores. Biocidal chemical compounds are commonly badly soluble in water and may therefore be applied as a solution in an organic solvent. In addition to the potentially negative effects of such solvents, e.g. fire hazards, risk of polluting the environment, risk of excessive exposure of the workers to the solvent, this direct application suffers from additional drawbacks.

Moreover, when a pesticide is applied to a substrate in a formulation intended to form a coating or a coating film on the substrate surface this coating film may be exposed to natural weathering and be prone to biological attacks from pests, such as fungi, e.g. ascomycetes or molds, algae, insects and bacteria. Therefore it is also of interest to protect components of a coating composition, such as a paint or wood preserving composition, from biological degradation.

Direct application of the pesticide may necessitate large doses of the pesticide in order to ensure a long-term effect. Large doses are generally not desirable, not only due to the cost of the pesticide but also in order to prevent excessive amounts of the pesticide from leaking into the ambient surroundings of wood treated with the pesticide. Moreover, directly applied pesticides are also exposed to environmental conditions that may degrade the pesticide into inactive compounds. In particular, pesticides applied to wooden constructions placed in an outdoor environment may be exposed to UV-light, which is known to break down organic molecules.

There is therefore a need to provide biocides in a formulation allowing smaller doses of the biocide to be applied to wood or timber, where release of the biocide is controlled and where the biocide is protected from degradation by UV-light.

WO2002/051517 relates to silica particles as carriers for liquid or solid substances; the silica particles may be nano- or microparticles. The substances may comprise biocides, such as fungicides and insecticides. The preparation of these particles is not described but examples of appropriate particles are given as commercial hollow micro glass beads and filterashes from the burning of coal.

WO2002/051517 does not provide any control of the characteristics of the carrier particles in particular in relation to the intended use for carrying a biocide. Thus, a biocide may be applied to commercially obtained particles without any integration of particle preparation with consideration of the characteristics of the biocide.

WO2005/110592 relates to mesoporous microparticles of e.g. silica which may be produced in a process involving spray drying and calcination at high temperature, e.g. 400 to 700°C. The microparticles may be loaded with an active substance, e.g. a biocide, for subsequent controlled release of the substance, and they are subsequently multilayer polyelectrolyte coated.

As for the particles of WO2002/051517, those of WO2005/110592 are also prepared without integration of the application of active substance in the preparation process and these particles are therefore expected to share the same limitations.

WO93/14630 discloses a microemulsion of pesticides for the preservation of timber. The microemulsion may be an oil-in-water or a water-in-oil emulsion wherein a pesticide, such as 3-iodo-2-propynyl butylcarbamate (IPBC), is present in droplets of less than 200 nm size. The microemulsion may also contain a surfactant and a cosurfactant; the surfactant may be ionic or nonionic, and the cosurfactant may be block copolymers of ethylene oxide and propylene oxide.

The emulsions of WO93/14630 provide a simple means to promote penetration of fungicides into timber in order to protect the timber from fungal degradation with the use of smaller amounts of organic solvent. However, the pesticidal formulation of WO93/14630 is applied directly to the substrate wood without any measures to control the release into the timber. Likewise, the pesticide will not be protected from UV-light after application, and in order to obtain a long-term effect it may be necessary to employ large doses of pesticide. Furthermore, the emulsions of WO93/14630 do not appear suited to be used as a constituent of a paint. Thus, it is not clear how the presence of particles, such as pigments or dye particles, may influence the protective properties of the emulsion since it may be expected that such particles may interact with the oil droplets in the emulsion. Likewise it is not clear if the emulsion of WO93/14630 will provide any protection to other components of a composition to be applied to a substrate.

WO2006/096544 describes ceramic structures for the controlled release of biologically active substances. The ceramic structures of WO2006/096544 are microparticles made from oxides of titanium, zirconium, tantalum, scandium, cerium, and yttrium. The ceramic structures may be roughly spherical and hollow and they may have pores. The biologically active substance employed in WO2006/096544 may be a fungicide and the particles may be used in a paint.

The ceramic structures of WO2006/096544 are typically produced by spray hydrolysing a solution of a metal salt to form particles, which are collected and heat treated, e.g. by calcination. The calcination may be performed e.g. at temperatures from 500 to 900°C. Solvent application/evaporation and drug melt are preferred methods for application of the biologically active substance to the ceramic structures.

Manufacture of the microparticles of WO2006/096544 is separate from application of active substances to the particles which may result in less than optimal integration of the substances with the particles.

US2006/0115506 describes yet another approach to apply fungicides to timber. Herein a suspension of colloidal silica or alumina particles is treated with a biocide before applying the suspension to a wood substrate. The particles are less than 1 µm in size, and the method of preservation relies on providing a driving force to transport the particles and the biocide into the wood.

No mechanism is explained in US2006/0115506 for how the particles affect penetration of the fungicide into the substrate. We suspect that the active compound molecules may adsorb to the surface of the colloidal particles, thus providing some degree of a controlled release. However, it is also possible that the colloidal particles serve to create nano-scale holes in the surface of the wood substrate to provide better penetration of the biocide into the wood than could be obtained without the use of colloidal particles. In neither case will the biocide be protected from the damaging effect of UV-light.

WO01/62232 relates to controlled release ceramic particles. These particles are nano- to microsized particles with an outer shell of silicon oxide or oxides of zirconium, aluminium or titanium. The particles are generally prepared in a sol-gel process from a water-in-oil emulsion of silanes, and as such may be provided with a hydrophobic outer surface by using a gel-precursor with an alkyl chain (e.g. using methyl trimethoxy silane as a gel-precursor). Where the use of the particles of WO01/62232 for carrying biocides or pesticides is speculated their main intended use appears to be to provide controlled release of pharmaceutically active compounds to an animal subject, i.e. where the particles are in direct contact with the aqueous bodily fluids of the animal. Therefore, it is demonstrated how modifying various synthesis parameters may be utilised to adjust the release rate of a compound, e.g. the water-soluble dye Orange II, into an aqueous medium. WO01/62232 does not demonstrate how more hydrophobic compounds, such as typical pesticides, may be enclosed in the nanoparticles. Such compounds can be expected to distribute primarily in the oil phase of a water-in-oil emulsion so that encapsulation in the particles formed will be prevented, unlike water-soluble compounds which are expected to be present in the aqueous droplets of the water-in-oil emulsion and therefore will end up inside the particles.

Microspheres of silicon oxide were made by Sun et al. (2003, Adv. Mater., 15: 1097-1100) in an oil-in-water emulsion process. These microspheres were of approximately 1 µm size and were prepared in an emulsion of 1,3,5-trimethyl benzene (TMB) in water using a polyethylene oxide-polypropylene oxide-polyethylene oxide triblock copolymer as an emulsifier and sodium silicate as a precursor for the ceramic particle shells. Botterhuis et al. (2006, Chem. Eur. J., 12: 1448-1456) subsequently examined how hydrophobic dyes could be encapsulated in microspheres using the preparation method of Sun *et al.* (2003); it was found that the location of the dye depended on the specific hydrophobicity of the dye, and thus it appeared that the least hydrophobic dyes were present in the silica shells of the particles whereas the more hydrophobic dyes were located more centrally in the particles. Likewise, it was found that the amount of dye that could be loaded into the particles also depended on the hydrophilicity of the dye. In summary, dyes could be incorporated into the hollow silica spheres by replacing up to 10 wt% of the TMB-solvent with dye during the synthesis procedure.

As for the particles of WO01/62232, the particles produced by Botterhuis *et al.* (2006) were intended for controlled release of drugs, and the release of dyes from the particles into an aqueous environment was studied. However, where diffusion of a compound from a porous particle in an aqueous environment, such as that found in the body of a mammalian patient, may readily be modelled using Fick's law of diffusion the release of compounds from hollow particles into a more complex environment possibly involving multiple phases cannot readily be predicted.

The present inventors have now found that hollow particles of a ceramic material may be employed to release a biologically active compound into an environment comprising heterogeneous solid phases, such as wood or timber. It has furthermore been found that the hollow particles provide protection from UV-light to biologically active compound not yet released from the particles, so that the particles provide a means for controlled release of wood protecting agents, or for controlled release of agents for the protection of components in a paint or coating composition.

### Brief description of the invention

The present invention relates to a method for the preparation of biocide microparticles for controlled release of a biocide, wherein each particle comprises a ceramic material having pores allowing the biocide to migrate to the surroundings. In one embodiment each particle comprises a shell of a ceramic material surrounding a hollow core containing a biocide, each shell having pores allowing the biocide to migrate from the hollow core to the surroundings. In another embodiment each particle comprises a uniform porous ceramic material, wherein the pores of the ceramic material contain the biocide and allow the biocide to migrate to the surroundings. The particles may comprise any ceramic material, and such materials will generally comprise an oxide of a metal or a semimetal. In a preferred embodiment the ceramic material is silica (SiO₂). In other embodiments the ceramic material is alumina (Al₂O₃), zirconia (ZrO₂) or titania (TiO₂). The ceramic material may also comprise organic moieties. Thus, for example organic moieties may be attached to the metallic or semimetallic element of the ceramic material in order to modify the functionality of the surface of the biocide particle, e.g. the surface of the pores of the ceramic material. These organic moieties may comprise alkyl chains to provide hydrophobic properties, or they may comprise alkyl chains with functional groups, such as nucleophiles, charged groups or reactive groups.

The biocide particles are generally small and may also be described as microparticles wherein the particle diameter is 0.1 to 10 µm (i.e. corresponding to "microparticles"). The biocide particles of the present invention generally take the form of a shell of the ceramic material surrounding a core containing the biocide or the particles take the form of a uniform porous ceramic material, wherein the pores of the ceramic material contain the biocide. The ceramic shell allows the active biocide compound to migrate through the shell in order to reach and affect the surrounding environment. When the particles comprise a uniform porous ceramic material the biocide migrates from the pores to the surroundings. The particles may also be described as porous, and in one embodiment the particles have pores with cross-sectional dimensions (or diameters) between 1 and 50 nm; this property is also called mesoporous. For example, 50% of the particles may have a pore diameter in the range of 1 nm to 50 nm. In particular, the pores may have diameters between 1 and 10 nm.

The biocide particles according to the present invention are especially useful for controlled release of active compounds into a non-aqueous environment, such as into a wood substrate, e.g. timber, or into a coating film to protect the substrate, the coating film or its components or any combination of these. For this purpose fungicidal compounds, such as 3-iodopropynyl butyl carbamate (IPBC), are employed in one embodiment of the invention although the particles may be prepared to contain any biocide. Other fungicidal compounds relevant to the biocide particles are tolylfluanid, N-cyclopropyl-N'-(1,1-dimethylethyl)-6-(methylthio)-1,3,5-triazine-2,4-diamine, tetrachloroisophthalonitrile, N-(trichloromethylthio)phthalimide, propiconazol, or tebuconazol, octyl-isothiazolinone, dichlor-isothiazolinone or Quat. The biocide particles of the present invention may also be used with a biocide active against algae, insects, termites and/or bacteria. In one embodiment terbythryn or zinkpyrothione are used as algaecides, although the invention is not limited to these. While any insecticide may be used with the invention, particularly suited insecticides comprise fipronil, thiamethoxam, chlorfenapyr and thiachloprid. The controlled release property is also of utility for release of active compounds, such as insecticides or herbicides, to soil for culturing plants. The invention relates to a method for the preparation of the biocide particles described above, the method comprising:
- providing an aqueous solution of a surfactant;
- providing a homogeneous mixture of a water-miscible organic solvent, a biocide, and optionally a water-immiscible apolar solvent;
- forming an emulsion of the mixture and the aqueous solution of a surfactant;
- mixing an aqueous solution of a ceramic precursor into the emulsion;
- optionally adjusting the pH of the emulsion containing the ceramic precursor to a pH-value below 7; and aging the emulsion containing the ceramic precursor.

Particles prepared according to this method will typically be classified as "microparticles", i.e. their size, as estimated from the particle diameter, will be from about 0.1 µm to about 10 µm.

Although any type of surfactant, such as cationic, anionic, zwitter-ionic or non-ionic, may be employed in the method, it is especially advantageous to use non-ionic surfactants. Non-ionic surfactants may comprise block copolymer having residues of ethylene oxide and propylene oxide, for example a tri block copolymer of poly-(ethylene oxide)-poly-(propylene oxide)-poly-(ethylene oxide) (EO-PO-EO, also known as poloxamers or Pluronic type surfactants), such as EO₇₆-PO₂₉-EO₇₆.

The surfactant will be dissolved in an aqueous solution, typically in a concentration of 1-10%(w/w).

The surfactant solution is subsequently emulsified with a mixture of a water-miscible organic solvent, a biocide, and optionally a water-immiscible apolar solvent. In order to provide a well-mixed emulsion of the biocide, such as IPBC, in the surfactant solution, the biocide is dissolved or suspended in a water-miscible organic solvent before mixing with the surfactant solution. Water-miscible organic solvents may be alcohols, ethers, ester, ketones, aldehydes or the like; a preferred water-miscible organic solvent is ethanol. A water-immiscible apolar solvent, such as an aromatic, aliphatic or cycloaliphatic solvent, may also be present to aid dissolution of the biocide. A water-immiscible apolar solvent for use in the method should preferably be miscible with the water-miscible organic solvent, and this solvent, when present, may constitute up to 10%(w/w) based on the water-miscible organic solvent. A preferred water-immiscible apolar solvent is 1,3,5-trimethyl benzene (TMB), although other apolar solvents may also be used. The biocide dissolved in the water-miscible organic solvent is typically present in an amount of up to 10%(w/w) of the water-miscible organic solvent, or when a water-immiscible apolar solvent is employed the amount of biocide will generally correspond to at least 30%(w/w) of the amount of the water-immiscible apolar solvent. Thus, the water-immiscible apolar solvent should comprise no more than 70% of the sum of the biocide and the water-immiscible apolar solvent.

Following formation of the emulsion a ceramic precursor is added to the emulsion. The ceramic precursor may be a single precursor of one type, or several chemically different ceramic precursors may be used in the preparation of the particles. A preferred ceramic precursor is an aqueous mixture of SiO₂ and Na₂O (or soluble silicate); when this precursor is employed it is further preferred to adjust the pH to maintain appropriate acidic conditions to control the reaction, e.g. to a pH between 4 and 6, such as to 5.2. If the aqueous solution of the surfactant is at a low pH the pH may be adjusted by adding dilute aqueous NaOH.

After addition of the ceramic precursor, and optionally adjusting pH, the emulsion containing the ceramic precursor is aged. In this aging step a reaction will proceed in which the shell of ceramic material forms around the micelles thus producing the biocide particles. The ceramic precursor may also react so as to form a porous ceramic material in place of the micelle so as to form biocide particles of a generally uniform cross-section. Appropriate aging or reaction times are from 5 minutes to 48 hours or more. The reaction will normally be performed at room temperature, e.g. around 25°C, or slightly higher, for example up to 40°C. When the desired reaction time has passed the reaction may be stopped by collecting the particles, e.g. by filtration.

According to the method of the invention, a preferred biocide is IPBC, although any biocide is appropriate. For example, fungicides, such as tolylfluanid, N-cyclopropyl-N'-(1,1-dimethylethyl)-6-(methylthio)-1,3,5-triazine-2,4-diamine, tetrachloroisophthalonitrile, N-(trichloromethylthio)phthalimide, propiconazol, or tebuconazol, octyl-isothiazolinone, dichlor-isothiazolinone or Quat, algaecides, such as terbythryn or zinkpyrothione, insecticides, such as fipronil, thiamethoxam, chlorfenapyr and thiachloprid, or bactericides are also relevant.

In a further aspect the invention relates to a composition for preservation of wood or timber comprising biocide particles according to the invention. The composition may comprise any customarily used auxiliaries, e.g. a suspending liquid or solvent and excipients such as fixing agents, softeners, emulsifiers, cross-linking agents, solution mediators, pigments, dyes, fillers, binders anti-corrosion agents, odour correctors, pH-regulators, UV-stabilisers, waxes, polymers and/or oils. The composition may be formulated as a liquid, a solid, a powder, a gel or a gel like substance, a liquifiable or mastic composition etc.

For example, a dry composition may be formulated for the end user to add the composition to a liquid, such as a paint, or the composition may be formulated as a liquid for direct use by the end user.

The invention also relates to the use of a composition according to the invention for preserving wood or timber from biological, such as fungal, degradation. According to the invention the composition is applied to the wood substrate to be preserved from degradation. The use of the composition will reflect the nature of the composition, e.g. a liquid composition may be applied using any method for application of liquid substances, such as a paint, to a surface. Several methods of application are known within the art. The use may involve the steps of optionally adding a dry composition to a suspending liquid; applying a liquid composition, the optional suspending liquid with the dry composition, a gel like composition etc. to a wood substrate; and allowing the applied composition to stabilise, e.g. by allowing the composition to dry or polymerise, allowing liquid components of the composition to evaporate etc.

In yet another aspect, the invention relates to the use of the biocides particles of the invention for protecting a coating film against biological degradation. For this purpose, the biocide particles are prepared with an appropriate biocide that is active against a pest which may attack any component of the coating film or a component of a coating composition for providing the coating film. The biocide particles may be applied to the coating composition at any stage of the process of forming a coating film to be protected. Thus, the biocide particles may be added to or be part of a coating composition prior to applying the coating composition to a substrate, or the biocide particles may be applied to a surface to which a coating composition has been applied.

The substrate to which the coating composition is applied is not relevant for the use of the biocide particles of the invention to protect a coating film against biological degradation. Thus, the coating film to be protected may be located on a substrate comprising wood, timber, metal, stone, mineral, plastic or any other material or a combination of different types of material. Biocide particles comprising a biocide to protect a coating film from degradation may also be combined with biocide particles providing protection of a wood or timber substrate from degradation. A degradation resistant composition comprising the biocide particles of the invention for preservation of wood or timber is thus also contemplated with the invention. However, a degradation resistant composition comprising the biocide particles of the invention need not contain biocide particles for the preservation of wood or timber.

In another aspect the invention relates to a coating film including biocide particles of the invention. Such a coating film may comprise particles of the invention physically adsorbed to the substrate surface, or the particles may be directly or indirectly cross-linked, or embedded in a matrix material on the substrate surface. The coating film may comprise biocide particles providing protection to a wood or timber substrate, or it may comprise biocide particles protecting the coating film or components of the coating film from biological degradation or a combination of biocide particles providing both or either of these properties.

### Brief description of the figures

Fig. 1 Shows an SEM of a biocide silica particle of the invention.
Fig. 2a Shows the fungicidal effect of biocide silica particles of the invention after exposing the particles to UV light.
Fig. 2b Shows the fungicidal effect of biocide silica particles of the invention with the particles not being exposed to UV light.
Fig. 3 Shows the release of IPBC to water as a function of time from particles of the invention.
Fig. 4 Shows a size comparison of microparticles prepared at two different scales.
Fig. 5a Shows a SEM of the cross-section a biocide silica particle of an embodiment the invention.
Fig. 5b Shows a SEM of the cross-section a biocide silica particle of an embodiment the invention.

### Detailed description of the invention

The present invention relates to a method for the preparation of biocide microparticles for controlled release of a biocide. In one embodiment each particle comprises a shell of a ceramic material surrounding a hollow core containing a biocide, each shell having pores allowing the biocide to migrate from the hollow core to the surroundings. In another embodiment each particle comprises a uniform porous ceramic material, wherein the pores of the ceramic material contain a biocide and allow the biocide to migrate to the surroundings. The particles of the invention are particularly suited for preventing biological, e.g. fungal, degradation of a wood substrate material to which the particles are applied. The biocide particles are also suited for protecting components of a coating film from biological degradation.

In this context the term "biocide" means any compound that is active against a biological entity, which may otherwise damage or degrade a wood substrate or a component in a coating composition or coating film. The biocide may actively kill the biological entity (so that the activity can be said to be "biocidal") or the biocide may prevent the growth of the biological entity (so that the activity can be said to be "biostatic"). The biocidal or biostatic activity may be directed against any biological entity capable of degrading a wood substrate or a component of a coating composition or coating film, i.e. the biological entity may be a fungus, such as a basidiomycete, an ascomycete, a mold or a filamentous fungus, an alga, a bacterium, an insect etc.

In the context of the present invention the term "controlled release" describes a situation where the biocide is gradually release from the particles. Thus, when the biocide is present in the particle it is generally not available to the surrounding environment and thereby protected from degradation from environmental factors. When the biocide is released during the controlled release it becomes available to the surrounding environment where it may exert its effect on present biological entities. The controlled release may therefore be viewed as different from application of a biocide in a liquid solution or suspension where all the biocide becomes available to degrading factors in the surrounding environment upon application.

In one embodiment of the present invention, the biocide particles are generally described as a shell of a ceramic material surrounding a hollow core containing the biocide. The "hollow core" in this context is intended to refer to the fact that the core is of a different composition than the "shell". Thus, the shell is a solid layer of the ceramic material surrounding the core, which may comprise the biocide and any residual components from the manufacture of the particles, such as surfactants and solvent, e.g. water, water-miscible organic solvent and apolar water-immiscible solvent. The ceramic material making up the shell may have pores or otherwise allow migration of material out of or into the hollow core. The thickness of the shell may have any relative value compared to the size of the particles.

In another embodiment, the biocide particles are generally described as particles comprising a uniform porous material. In the context of the invention the term "uniform" refers to the appearance of the cross-section of a particle. Thus, observation of the cross-section of a particle comprising a uniform porous material will not reveal significant deviations in the material making up the particle. The pores of the porous material will allow a biocide to be contained in the pores, e.g. adsorbed to the surface of the ceramic material. Biocide present in the pores of a particle comprising a uniform porous material may migrate from the pores to the surroundings.

Biocide particles of both embodiments allow the biocide contained in the particles to migrate to the surroundings. For example, when the biocide particles are used for protecting timber or wood from fungal degradation a biocide may migrate from the core of the particle or from the pores of a particle of a uniform porous ceramic material into the ambient substrate material thereby providing a protective effect. Biocide compounds still present in the particle may, on the other hand, be protected from degradation caused by e.g. UV-light. The shell or the pores of the uniform porous ceramic material may also be used for loading the particles with a biocide. For example, in one aspect of the invention the particles are prepared with a hydrophobic core and/or pores having a hydrophobic surface allowing a hydrophobic biocide to migrate into the particle, thereby loading the particle. A loaded particle may subsequently release the biocide into a substrate material as described above.

The ceramic material of the particles, e.g. the shell or the uniform porous ceramic material, of the invention may be made from any ceramic material. In the context of the present invention, the term "ceramic material" is intended to cover solid materials comprising oxides of inorganic elements, although the materials may also comprise organic moieties covalently coupled to elements of the ceramic material. Examples of appropriate ceramic materials are oxides of silicon (Si), aluminium (Al), zirconium (Zr) and titanium (Ti). Oxides of silicon are preferred ceramic materials. The ceramic material will generally comprise a base of a material comprising an oxide of a metal or a semimetal. The base may be made from oxides of a single metal or semimetal, or the base may contain a oxides of several different elements. When several different metallic or semimetallic elements are comprised in the ceramic base material these may be present randomly in the base, or the base may comprise layers of different ceramic materials. In a preferred embodiment the ceramic material is based on an oxide of a single element, and preferably the ceramic material constituting the base is silica (SiO₂). In other embodiments the ceramic material is alumina (Al₂O₃), zirconia (ZrO₂) or titania (TiO₂), or mixtures of these, optionally also mixed with silica.

The ceramic material may also comprise organic moieties. Organic moieties may be included in the ceramic material to bring desired additional functionalities to the surface of the shell and/or the surface of the pores. Such additional functionalities are considered to be those, which are different from the inherent nature of the ceramic material. In the embodiment where the biocide particles have a shell, the shell will have an outer surface facing the surrounding environment and an inner surface facing the biocide. The pores of the ceramic material of biocide particles according to both the embodiment where the particles have a shell and the embodiment with particles comprising a uniform porous ceramic material may generally be considered to be an inner surface facing the biocide. Additional functionalities located on the outer surface may be the same or different from additional functionalities located on the inner surface. Appropriate additional functionalities on the outer surface of the particle shell or the particle may be moieties to aid in solubilisation of the particles, such as positively or negatively charged groups, or groups to increase the hydrophilicity of the surface. The outer surface may also comprise reactive groups, such as epoxies, nucleophiles, organic double bonds, etc., allowing the particles to be cross-linked with other particles or with cross-linking compounds. The inner surface of a ceramic shell or the pores of the ceramic material may be provided with additional functionalities comprising hydrophobic moieties. Such moieties may be selected with the intention to promote or delay the release of a biocide from the core or the pores of the particle to the surrounding environment, or the additional functionality may affect the form of the biocide in the particle. Appropriate additional functionalities on the inner surface of the particles may be alkyl chains of from 1 to e.g. 20 or more carbon atoms, such as C₁, C₂, C₃, C₄, C₅, C₆, C₇, C₈, C₉, C₁₀, C₁₁, C₁₂, C₁₃, C14, C₁₅, C₁₆, C₁₇, C₁₈, C₁₉, C₂₀ alkyls. The alkyl chains may be straight or branched, saturated or unsaturated, linear or cyclic. Alkyl chains on the inner surface may also comprise perfluoro groups to further increase the hydrophobicity.

Depending on the exact type of reaction and reaction conditions employed to form the particles the particles may be classified as microparticles cle" in this context is a particle within the size range of about 0.1 µm and up to e.g. 10 µm or larger, such as about 1 µm. The size may also described as the "particle diameter". However, the particles of the present invention need not be round or spherical. In some embodiments the particles may be oblong (meaning that one dimension is larger than the other two) or shaped as discs or flakes (meaning that two dimensions are larger than the third dimension). It is, however, preferred that the three dimensions of a given particle are approximately equal. It is also preferred that a preparation of particles made according to the methods of the invention is relatively monodisperse meaning that the particles in the preparation are of approximately the same size. A "particle" may also appear as a cluster of several smaller particles.

The ceramic shell of the particles of the invention allows the active biocide compound to migrate through the shell in order to reach and affect the surrounding environment. Alternatively, the biocide may be located in the pores of the porous ceramic material allowing the biocide to migrate from the pores into the surroundings. The particles may therefore also be described as porous, and in one embodiment the particles have pores with cross-sectional dimensions (or diameters) between 1 and 50 nm; this property is also called mesoporous. For example, 50% of the particles may have a pore diameter in the range of 1 nm to 50 nm. In particular, the pores may have diameters between 1 and 10 nm.

The ceramic particles of the invention are particularly suited for controlled release of a fungicide, such as 3-iodopropynyl butyl carbamate (IPBC), tolylfluanid, N-cyclopropyl-N'-(1,1-dimethylethyl)-6-(methylthio)-1,3,5-triazine-2,4-diamine, tetrachloroisophthalonitrile, N-(trichloromethylthio)phthalimide, propiconazol, or tebuconazol, octyl-isothiazolinone, dichlor-isothiazolinone or Quat to a substrate, such as a wood substrate or a coating film, in a non-aqueous environment. However, biocides of use with the particles of the present invention are not particularly limited. When the particles are intended for the provision of a protective effect against fungal degradation an appropriate biocide may be a compound selected from the groups of fungicides active against wood-rotting basidiomycetes or filamentous fungi. The fungicide(s) can comprise one or more fungicides selected from the group of conazoles and ergosterol biosynthesis inhibitors to prevent the growth of white rot, brown rot, and soft rot fungi, which are the major causes of wood decay in untreated wood. Conazoles useful in this invention include climbazole, clotrimazole, imazalil, oxpoconazole, prochloraz, triflumizole, azaconazole, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, metconazole, myclobutanil, penconazole, propiconazole, prothioconazole, quinconazole, simeconazole, tebuconazole, tetraconazole, triadimefon, triadimenol, triticonazole, uniconazole, and uniconazole-P. Ergosterol biosynthesis inhibitors useful in this invention include morpholine fungicides such as aldimorph, benzamorf, carbamorph, dimethomorph, dodemorph, fenpropimorph, flumorph, and tridemorph.

Other fungicides that have been found to be effective against one or more wood-rotting fungi include carboxin, iprodione, fenpiclonil, ferbam, fenpiclonil, capafol, 8-hydroxyquinoline, nabam, oxycarboxin, cyprodinil, chlorothanil, axaoxystrobin, trifloxystrobin, thiram, fluazinam, terrazole, carbendazim, and benomyl. These fungicides can be used in combination with one or more conazoles or ergosterol biosynthesis inhibitors in the invention.

Combinations of fungicides that are especially effective are those in which the separate fungicides have different and complementary modes of action. Fungicides as a group are known to exhibit a wide variety of modes of action. These modes of action function as uncouplers, kinase inhibitors, or metal chelators, or are known to affect such metabolic activities as succinate dehydrogenation, respiration, tubulin formation, nucleic acid biosynthesis, cell division, acetaldehyde dehydrogenation, or methionine biosynthesis. For example, the triazole fungicides (e.g., flusilazole, tebuconazole, and propiconazole) function as ergosterol biosynthesis inhibitors.

The particles may also be employed with insecticides. Suitable insecticides are fipronil, thiamethoxam, chlorfenapyr and thiachloprid but also include include pyrazolines, indazoles, oxyindazoles, pyrazoline carboxanilides, pyridazines, oxadiazines, tricyclic pyridazines, tricyclic oxadiazines, tricyclic triazines, carbamates, organophosphates (e.g., chlorpyrifos and dichlorvos), and fenvalerate. Another relevant insecticide is indoxacarb and its metabolite are the insecticide. Indoxacarb is a common name assigned by the International Organization for Standardization (ISO) to methyl (4aS)-7-chloro-2,5-dihydro-2-[[(methoxycarbonyl)[4-(trifluoromethoxy)phenyl]amino]carbonyl] indeno[1,2-e][1,3,4]oxadiazine-4a(3H)-carboxylate. Of note is a mixture of indoxacarb and its inactive (R)-isomer in a ratio from 30:70 to 100:0. Also of note is a 1:1 mixture of indoxacarb and its inactive (R)-isomer. Also of note is a 3:1 mixture of indoxacarb and its inactive (R)-isomer. Of particular note is indoxacarb with less than 5% of its inactive (R)-isomer. The invention relates to a method for the preparation of biocide particles according to the invention, the method comprising providing an aqueous solution of a surfactant; providing a homogeneous mixture of a water-miscible organic solvent, a biocide, and optionally a water-immiscible apolar solvent; forming an emulsion of the mixture and the aqueous solution of a surfactant; mixing an aqueous solution of a ceramic precursor into the emulsion; optionally adjusting the pH of the emulsion containing the ceramic precursor to a pH-value below 7; and aging the emulsion containing the ceramic precursor.

Particles prepared according to this method will typically be of a size within the range of 0.1 to 100 µm so that they may be classified as microparticles.

The ceramic particles of the invention may thus be prepared in processes involving a ceramic precursor. In this context, the term "ceramic precursor" refers to compounds or molecules, which in solution or suspension may be caused to react to form a ceramic material as defined above. As such the ceramic precursor will contain a metallic or non-metallic element and additional groups providing the necessary reactivity for the precursor molecule to react with other precursor molecules to form the ceramic material. It can thus be said that a ceramic precursor may have a function parallel to that of a monomer in polymer chemistry, although this comparison should not be construed as limiting. Ceramic precursors for preparation of particles of the invention are preferably soluble in water.

In the aspect of the invention relating to a method to prepare microparticles the ceramic precursor is preferably a soluble silicate (e.g. expressed as Na₂Si₃O₇ or an aqueous mixture of SiO₂ and Na₂O). The chemistry of soluble silicates is complex but in its most simple form the reaction may be viewed as a reaction between the silicate ("SiO₃²⁻") and acid to form solid silicon oxide ("SiO₂"):

SiO₃²⁻(aq) + H⁺ -> SiO₂(s) + OH⁻

The method for preparation of particles according to the invention are, however, not limited to a single type of ceramic precursor. The precursors used in the preparation of a given type of particles may thus comprise both soluble silica type precursors as well as the silane type precursors. Likewise, more than one type of silane type precursor may be employed. The method to prepare the biocide particles of the invention employ surfactants in aqueous solutions. Any type of surfactant, such as cationic, anionic, zwitter-ionic or non-ionic, may be used in either method of the invention. However, non-ionic surfactants are preferred. Multiple types of non-ionic surfactants exist and are readily available and known to a skilled person. These surfactants typically comprise compounds with one or more hydrophilic portions covalently linked to one or more hydrophobic portions; the hydrophilic and hydrophobic portions will normally be linked covalently via ether or ester links, or thioether or thioester links. Different portions may also be indirectly linked to each other via a linker molecule, such as a glycerol molecule where the ether or ester bonds may be formed with the hydroxyls of the glycerol. The different portions may be derived from natural sources, such as from sugar moieties and fatty acids for the hydrophilic and hydrophobic portions, respectively, or the different portions may be prepared artificially. Artificially made portions of surfactants may be constructed from monomers, such as ethylene oxide or propylene oxide, of appropriate characteristics; these monomers may be joined in polymeric blocks of the same type, and hydrophobic and hydrophilic blocks may then be joined together to form a block copolymer. Block copolymers may have two or more blocks, for example in a tri block copolymer the blocks may be linked in the following pattern 'hydrophilic-hydrophobic-hydrophilic'. The size of a surfactant may range from a few hundred Daltons to several thousands Daltons for polymeric types of surfactants.

Some types of non-ionic surfactants are sold under tradenames such as Pluronic, Tween, Brij, Triton, Tergitol, with additional codes defining the properties of the specific type. However, many more exist and a comprehensive list of non-ionic surfactants is maintained by Sigma-Aldrich Co. (e.g. http://www.sigmaaldrich.com/catalog/search/TablePage/14572924).

The properties of the surfactant will influence the parameters of the particles resulting from the methods of the invention. In addition to the presence or lack of charges important properties are such things as the hydrophilic-lipophilic balance (HLB) of the surfactant and its critical micelle concentration (CMC) as well as properties of the micelles.

The HLB provides an estimate of to which degree a surfactant is hydrophilic or lipophilic (i.e. hydrophobic) so that a more hydrophilic surfactant will have a high value and a more hydrophobic surfactant will have a low value. A list of HLB values for a range of commonly employed surfactants is given in Table 1.

**Table 1, HLB-values of common surfactants**

| **Trade name** | **Synonym** | **HLB** |
|---|---|---|
| | 2,4,7,9-Tetramethyl-5-decyne-4,7-diol | 4.0 |
| | PEG-block-PPG-block-PEG, MN 1100 | 4.0 |
| | PEG-block-PPG-block-PEG, MN 2000 | 4.0 |
| | PEG-block-PPG-block-PEG, MN 2800 | 4.0 |
| | PEG-block-PPG-block-PEG, MN 4400 | 4.0 |
| | Ethylenediamine tetrakis(PO-b-EO) tetrol, MN 3600 | 4.0 |
| | Ethylenediamine tetrakis(EO-b-PO) tetrol, MN 7200 | 4.0 |
| | Ethylenediamine tetrakis(EO-b-PO) tetrol, MN 8000 | 4.0 |
| Igepal® CA-210 | Polyoxyethylene(2) isooctylphenyl ether | 4.3 |
| Span® 80 | Sorbitan monooleate | 4.3 |
| | PPG-block-PEG-block-PPG, MN 3300 | 4.5 |
| Igepal CO-210 | Polyoxyethylene(2) nonylphenyl ether | 4.6 |
| Span® 60 | Sorbitan monostearate | 4.7 |
| Brij® 92 | Polyoxyethylene(2) oleyl ether | 4.9 |
| Brij® 72 | Polyoxyethylene(2) stearyl ether | 4.9 |
| Brij® 52 | Polyoxyethylene(2) cetyl ether | 5.3 |
| Span® 40 | Sorbitan monopalmitate | 6.7 |
| Merpol® A surfactant | | 6.7 |
| | 2,4,7,9-Tetramethyl-5-decyne-4,7-diol ethoxylate | 8.0 |
| Triton® SP-135 | | 8.0 |
| Span® 20 | Sorbitan monolaurate | 8.6 |
| | PEG-block-PPG-block-PEG, MN 5800 | 9.5 |
| | PPG-block-PEG-block-PPG, MN 2700 | 9.5 |
| Brij® 30 | Polyoxyethylene(4) lauryl ether | 9.7 |
| Igepal® CA-520 | Polyoxyethylene(5) isooctylphenyl ether | 10.0 |
| Igepal® CO-520 | Polyoxyethylene(5) nonylphenyl ether | 10.0 |
| | Polyoxyethylene sorbitol hexaoleate | 10.2 |
| Merpol® SE surfactant | | 10.5 |
| Tween® 85 | Polyoxyethylene(20) sorbitan trioleate | 11.0 |
| | 8-Methyl-1-nonanol propoxylate-block-ethoxylate | 11.0 |
| | Polyoxyethylene sorbitan tetraoleate | 11.4 |
| Triton® X-114 | Polyoxyethylene(8) isooctylphenyl ether | 12.4 |
| Brij® 76 | Polyoxyethylene(10) stearyl ether | 12.4 |
| Brij® 97 | Polyoxyethylene(10) oleyl ether | 12.4 |
| Merpol® OJ surfactant | | 12.5 |
| Brij® 56 | Polyoxyethylene(10) cetyl ether | 12.9 |
| Merpol® SH surfactant | | 12.9 |
| Tergitol® NP-9 | Nonylphenol polyethylene glycol ether | 12.9 |
| | 2,4,7,9-Tetramethyl-5-decyne-4,7-diol ethoxylate (5 EO/OH) | 13.0 |
| Triton® SP-190 | | 13.0 |
| Igepal® CO-630 | Polyoxyethylene(9) nonylphenyl ether | 13.0 |
| Triton® X-100 | Polyoxyethylene(10) isooctylphenyl ether | 13.5 |
| Igepal® CO-720 | Polyoxyethylene(12) nonylphenyl ether | 14.2 |
| | Polyoxyethylene(12) tridecyl ether | 14.5 |
| | Polyoxyethylene(18) tridecyl ether | 14.5 |
| Igepal® CA-720 | Polyoxyethylene(12) isooctylphenyl ether | 14.6 |
| Tween® 80 | Polyoxyethylene(20) sorbitan monooleate | 14.9 |
| Tween® 60 | Polyoxyethylene(20) sorbitan monostearate | 15.0 |
| | PEG-block-PPG-block-PEG, MN 2900 | 15.0 |
| | PPG-block-PEG-block-PPG, MN 2000 | 15.0 |
| Brij® 78 | Polyoxyethylene(20) stearyl ether | 15.3 |
| Brij® 98 | Polyoxyethylene(20) oleyl ether | 15.3 |
| Merpol® HCS surfactant | | 15.5 |
| Tween® 40 | Polyoxyethylene(20) sorbitan monopalmitate | 15.6 |
| Brij® 58 | Polyoxyethylene(20) cetyl ether | 15.7 |
| | Polyethylene-block-poly(ethylene glycol)Mn 2250 | 16.0 |
| Tween® 20 | Polyoxyethylene(20) sorbitan monolaurate | 16.7 |
| Brij® 35 | Polyoxyethylene(23) lauryl ether | 16.9 |
| | 2,4,7,9-Tetramethyl-5-decyne-4,7-diol ethoxylate (15 EO/OH) | 17.0 |
| Igepal® CO-890 | Polyoxyethylene(40) nonylphenyl ether | 17.8 |
| Triton® X-405 | Polyoxyethylene(40) isooctylphenyl ether | 17.9 |
| Brij® 700 | Polyoxyethylene(100) stearyl ether | 18.8 |
| Igepal® CO-990 | Polyoxyethylene(100) nonylphenyl ether | 19.0 |
| Igepal® DM-970 | Polyoxyethylene(150) dinonylphenyl ether | 19.0 |
| | PEG-block-PPG-block-PEG, MN 1900 | 20.5 |
| Pluronic F68 | PEG-block-PPG-block-PEG, MN 8400 | 24.0 |
| | Ethylenediamine tetrakis(PO-b-EO) tetrol, MN 15000 | 24.0 |
| | PEG-block-PPG-block-PEG, average Mn ca. 14,600 | 27.0 |

The surfactants are typically highly soluble in water but when the surfactant is present at or above a specific concentration, i.e. its CMC, the surfactant will form micelles. When the surfactant is dissolved in water above its CMC the individual surfactant molecules will group together so that the hydrophobic portions will be 'shielded' from the water molecules by the hydrophilic portions. The micelle may be described as having a hydrophobic core surrounded by a hydrophilic outer surface. When an apolar molecule, such as a solvent or a hydrophobic biocide, is present in the aqueous solution of the surfactant the apolar molecule will generally be present inside the micelles thereby forming an emulsion (i.e. in this case an oil-in-water emulsion).

Regardless of the presence of an apolar or hydrophobic molecule in the core of the micelle, the micelle in a solution or emulsion may be used as a 'scaffold' for forming a ceramic shell around the micelle. By adding a ceramic precursor to the solution/emulsion of the micelle the ceramic precursor may be caused to polymerise and thus form a ceramic shell around the micelle so that a particle comprising a shell of a ceramic material surrounding a hollow core with generally hydrophobic properties is formed. The micelle may also be used as a scaffold to form a ceramic particle with a uniform cross-section. For example, the ceramic precursor may react on the surface of the micelle to form a shell, or the ceramic precursor may react both on the surface of the micelle and also in the micelle to form a particle having a uniform cross-section. It is believed by the present inventors that the form of the particle produced in the reaction, e.g. a particle with a shell or a uniform particle, may be controlled by choice of solvents, surfactants and ceramic precursors, and by controlling the reaction conditions.

If desired, the particles may be provided with a hydrophobic 'lining' on the inner surface of the ceramic shell or the surface of the pores of the ceramic material or an additional functionality on the outer surface. This may be achieved by using a ceramic precursor with appropriate hydrophobic or functional groups as described above. When the particles are prepared in an oil-in-water emulsion or in an aqueous solution or emulsion of a surfactant the particles will form around a hydrophobic oil droplet or a hydrophobic core of a micelle. In this case the additional functional groups on a ceramic precursor will align according to the hydrophobicity of the additional functional group. Thus, precursor molecules with hydrophobic groups are expected to be positioned with the hydrophobic group facing the oil droplet or the hydrophobic core of a micelle. In contrast, precursor molecules with hydrophilic groups are expected to be positioned with the hydrophilic group facing the bulk aqueous face. Thereby the hydrophobic groups, such as alkyl chains or perfluoro derivatised alkyl chains, may provide a hydrophobic lining on the inner surface of the particles, e.g. the inner surface of the shell or the surface of the pores, and hydrophilic groups, such as positively or negatively charged groups, may provide a corresponding outer surface on the particles.

The size of micelles can be said to influence the size of the particles prepared. The size of the micelle will in turn be influenced by such parameters as the surfactant chemistry, temperature, pH and ionic strength of the solution, shear forces in the solution, and the presence of hydrophobic molecules, e.g. apolar solvents or biocide molecules, in the micelle.

Thus, in summary the surfactant for use in the methods of the present invention will especially be selected from the desired particle size and properties, the chemical nature of the biocide to be incorporated in the particle (e.g. its hydrophobicity) and the type of ceramic precursor. The invention relates to a method for the preparation of the biocide particles comprising:
- providing an aqueous solution of a surfactant;
- providing a homogeneous mixture of a water-miscible organic solvent, a biocide, and optionally a water-immiscible apolar solvent;
- forming an emulsion of the mixture and the aqueous solution of a surfactant;
- mixing an aqueous solution of a ceramic precursor into the emulsion;
- optionally adjusting the pH of the emulsion containing the ceramic precursor to a pH-value below 7; and
- aging the emulsion containing the ceramic precursor.

In one embodiment the surfactant is selected among the group consisting of a block copolymer having residues of ethylene oxide (EO) and propylene oxide (PO). In particular, the block copolymer may be a tri block copolymer of ethylene oxide and propylene oxide in the form EOₓ-PO_{y}-EO_{z}, where x, y and z in an especially preferred embodiment have the respective values 76, 29 and 76 (this surfactant is also known as Pluronic F68). The surfactant is preferably dissolved in water to a concentration of 1-10%(w/w).

The characteristics of the surfactant solution, e.g. the micelles, may further be controlled by adjusting parameters such as the pH or the ionic strength of the solution or its temperature, or shear forces occurring in the solution. For example, the pH of the solution may be adjusted by addition of aqueous HCl, e.g. of 1 M concentration, to make a final H⁺-concentration of 0.1 to 0.2 M.

The surfactant solution is subsequently emulsified with a mixture of a water-miscible organic solvent, a biocide, and optionally a water-immiscible apolar solvent. This emulsion will typically be an oil-in-water emulsion. Biocides, such as IPBC, are commonly hydrophobic and poorly soluble in water. In order to provide a well-mixed emulsion of the biocide in the surfactant solution, the biocide is dissolved or suspended in a water-miscible organic solvent before mixing with the surfactant solution. Water-miscible organic solvents may be alcohols, ethers, ester, ketones, aldehydes or the like; a preferred water-miscible organic solvent is ethanol, in particular water-free ethanol, such as of a 99.9% concentration. A water-immiscible apolar solvent, such as an aromatic, aliphatic or cycloaliphatic solvent, may also be present to aid dissolution of the biocide. This is particularly relevant when the biocide is of limited solubility in the water-miscible organic solvent. A water-immiscible apolar solvent for use in the method should preferably be miscible with the water-miscible organic solvent, and this solvent, when present, preferably constitutes up to 10%(w/w) based on the water-miscible organic solvent. A preferred water-immiscible apolar solvent is 1,3,5-trimethyl benzene (TMB), although other apolar solvents may also be used. The biocide dissolved in the water-miscible organic solvent is typically present in an amount of up to 10%(w/w) of the water-miscible organic solvent, or when a water-immiscible apolar solvent is employed the amount of biocide will generally correspond to at least 30%(w/w) of the amount of the water-immiscible apolar solvent. Thus, the water-immiscible apolar solvent should comprise no more than 70% of the sum of the biocide and the water-immiscible apolar solvent.

Upon mixing the biocide-containing water-miscible organic solvent with the surfactant solution an emulsion will form due to precipitation of the water-immiscible components, such as the biocide and the optional water-immiscible polar solvent. Without being bound by any theory it is believed that the surfactant micelles take up the biocide compound which will then be located within the micelles; in order to promote this, the components should be mixed, such as by stirring or agitation, when adding the mixture of the biocide and the solvent(s) to the surfactant solution.

The reaction of ceramic precursor, e.g. soluble silicate, takes place naturally under acidic conditions. The soluble silicate is stable under basic conditions and upon addition to the emulsion the acidic conditions of the emulsion will initiate the reaction to form the silica ceramic. In order to control the reaction it may be necessary to control the pH of the emulsion. The pH is preferably adjusted by adding dilute aqueous base, such as NaOH of a concentration of 0.1 to 2 M. If the pH value is too low the reaction will proceed too fast and may not result in the formation of particles having appropriate properties. During the reaction the pH should be below 7 and above 4, preferably above 5, such as at about 5.2.

After optionally adjusting the pH the emulsion is aged for the particles to form. The formation of the particles will be dependent on both the pH and also on the reaction time. The exact properties of the particles, such as the size and shape, of the resulting particles will thus also depend on the reaction time and the particle size may to some extend be controlled by adjusting the reaction time. These properties may also be influenced by the concentration of the ceramic precursor. Appropriate aging or reaction times are from 5 min to 48 hours or more, such as up to 24 hours, up to 16 hours, or up tp 8 hours, e.g. about 1 hour. The reaction will normally be performed at room temperature, e.g. around 25°C, or slightly higher, for example up to 40°C. When the desired reaction time has passed the reaction may be stopped by collecting the particles, such as by filtration. Prior to filtration the particles may be settled centrifugally or by addition of salt or an appropriate solvent.

The collected particles may be washed with a liquid, such as water or an organic solvent, before formulating into an appropriate composition.

In a further aspect the invention relates to a composition for preservation of wood or timber comprising the biocide particles of the invention. Such a composition may also be called a coating or a paint, and in the context of the present invention, the terms "coating" and "paint" may be used interchangeably. The terms are meant to refer to any liquid, gel, powder, liquifiable, or mastic composition which after application to a substrate or surface in a layer of a certain thickness is converted to an essentially solid, or semi-solid film. This film may also be termed a "coating film", which term thus refers to a film formed from a coating composition after application of the coating composition to a substrate. In one embodiment the coating composition may comprise biocide particles with a biocide protecting the coating composition or a component in the coating composition from biological degradation, e.g. such as may be caused by attack from fungi, bacteria, algae, insects etc.

The biocide particles may be formulated in a dry or liquid composition together with customarily used auxiliaries. The composition is preferably liquid. The term "liquid" composition is also intended to describe a composition in the form of a gel or a gel-like substance, both of which are considered within the scope of the invention. The auxiliaries may comprise a suspending liquid and excipients such as binders, fixing agents, softeners, emulsifiers, cross-linking agents, solution mediators, pigments, dyes, anti-corrosion agents, odour correctors, pH-regulators, UV-stabilisers, waxes, and/or oils.

A coating composition typically comprises one or more of a binder (also called resin), a solvent (also called vehicle), a filler and optionally one or more further additives or auxiliaries.

The filler serves to thicken the film, support its structure and simply increase the volume of the coating composition and lower the cost. Fillers are usually comprised of cheap and inert materials, such as one or more of talc, calcium carbonate, kaolin, lime, baryte, clay, etc. Coating compositions that will be subjected to abrasion may contain fine quartz sand as a filler. Not all coating compositions include fillers, and the inclusion of fillers is optional.

When the coating composition is a paint it will normally comprise a pigment or the like. Pigments are granular solids incorporated into the paint to contribute colour and opacity. Furthermore, they will for wood stains contribute to the UV-protection. Alternatively, some paints contain dyes instead of or in combination with pigments. Other paints contain no pigment at all. Pigments can be classified as either inorganic or organic pigments. Inorganic pigments include e.g. titanium dioxide, carbon black or red and yellow iron oxides, or other transition metal oxides or salts of such metals. The group of organic pigments comprises synthesised and/or modified organic compounds with chromatic properties, e.g. phthalo blue, phtalo green and chinacridone.

A major purpose of the solvent (or vehicle) is to adjust the viscosity of the paint. It can also control flow and application properties, and affect the stability of the paint while in liquid state. Its main function is to act as a carrier for the non-volatile components. The volatility of a solvent may also be a parameter for consideration, and solvents are generally more or less volatile. A water-based coating composition will have water as the main vehicle, and for oil-based coating compositions one or more organic solvents, such as an aliphatic solvent, aromatic solvent, alcohol, ketone, petroleum distillate, ester, and/or glycol ether, or the like will typically be used as the vehicle. A coating composition may also comprise a mixture or emulsion of several different solvents serving as the vehicle. Optionally, coating compositions can comprise a volatile low-molecular weight synthetic resin also serving as diluent.

A coating composition may also comprise one or more further additives or auxiliaries, which are usually added in smaller amounts (e.g. less than 5%, 1%, 0.1%, or 0.01% (vol./vol.). The presence of such additives or excipients may have a significant effect on the product. Additives can comprise one or more of a catalyst, thickener, stabiliser, emulsifier, texturiser, adhesion promoter, UV-stabiliser, flattener (de-glossing agent), an agent to modify and/or control surface tension, an agent to improve and/or control flow properties, an agent to improve the finished appearance, an agent to increase the wet edge, an agent to improve pigment stability, an agent to impart anti-freeze properties, an agent to control foaming, an agent to control skinning, an agent to catalyse drying, etc.

The binder or resin can be described as the actual film forming component of a coating composition. The binder imparts adhesion, binds the optional pigment(s) and/or other components together, and influences such properties as gloss potential, exterior durability, flexibility, and toughness. Binders include synthetic or natural resins such as acrylics, polyurethanes, polyesters, melamine resins, epoxy, alkyds, modifications of these or oils.

The composition is not limited to one type of particles but may comprise particles prepared according to either of the above-described aspects. Thus, the composition may comprise ceramic microparticles or nanoparticles or a mixture of ceramic microparticles and nanoparticles. Likewise, the composition is not limited to containing particles with only a single biocide. For example, the composition may comprise a mixture of different particles each comprising a different biocide so that a composition may comprise particles with several fungicides active against different kinds of fungi and/or several types of insecticides active against different kinds of insects. The auxiliaries will typically be selected considering the environment for use of the composition and the desired physical properties of the composition. For example, auxiliaries may be chosen based on the average temperature of the environment where the composition is to be used, or the typical annual or daily variation in temperature in this environment. Other parameters for selecting auxiliaries may be the humidity of the environment or the occurrence of precipitation, such as rain or snow, or the presence of environmental pollutants, such as ozone, NOₓ, acid rain, particulate contamination from burning of fossil fuels, etc. The physical properties of the composition may comprise such factors as the viscosity of or the volatility of liquid components in of a liquid composition, its stability, ease of handling, including application on a substrate material, etc.

In yet a further aspect the invention relates to the use of a composition according to the invention for preserving wood or timber from biological degradation. This biological degradation may be degradation caused by fungi, bacteria or other microbes, or insects. Typically the composition will comprise one or more type of particles containing one or more biocides known to be relevant for a relevant environment in which it is intended to use the composition. The composition may be used for preserving any kind of wood in any environment. The composition is preferably used in an outdoors environment where the risk of contamination with germs or insect causing wood degradation is significant. The composition of the invention may be applied to a substrate using any appropriate procedure. For example, the composition may be applied to a wooden substrate with a paint brush, by rolling or spraying or by dip-coating a substrate into a composition of the invention. Several relevant procedures are known to the skilled person. In the application of the composition the biocide particles should be brought in contact with the substrate wood or timber and the application method may be selected to obtain this.

In a further aspect, the invention relates to the use of the biocides particles of the invention for protecting a coating film against biological degradation. When used to protect a coating film the biocide particles may form part of the coating composition to be applied to a substrate, or the biocide particles may be applied to the coating film formed after application of the coating composition, or during any drying or curing process leading to the formation of the coating film. When the biocide particles are applied as a composition separate from the coating composition the composition may be formulated as a liquid, a solid, a powder, a gel or a gel like substance, a liquifiable or mastic composition etc. Such a composition may comprise any excipient(s) appropriate for the formulation, such as a polymer, surfactant, thickener, defoamer, stabilising agent, pigment, extender, UV-absorber, pH-regulator and/or wax etc. or a combination of these. When the biocide particles are part of the coating composition for providing the coating film the components discussed above are appropriate; a coating composition comprising biocide particles of the invention may also be described as a degradation resistant coating composition, and the coating provided with this composition as a degradation resistant coating film. Degradation resistant coating compositions and degradation resistant coating films are also considered to be within the scope of the invention.

In another aspect the invention relates to a film including biocide particles according to the invention. A film according to the invention may be formed by application to a substrate of a liquid composition comprising the particles followed by allowing the applied composition to form the film. A binder comprised in a coating composition may be categorised according to the drying, or curing mechanism, used for a given coating composition to provide a coating film. Common principles are solvent evaporation, oxidative cross-linking, (catalysed) polymerisation, and coalescence. The term organic binder relates to organic polymeric material.

Drying and curing can be regarded as two different processes although the aim of both processes is to provide the coating film. Drying generally refers to evaporation of the vehicle, whereas curing refers to polymerisation of the binder. The two principles may be combined for a coating composition so that the coating film is formed by a combination of drying and curing. Thus, there are coating compositions that only dry, those that dry then cure, and those that do not depend on drying for curing, etc. Coating compositions that dry by simple solvent evaporation usually contain a solid binder dissolved in a solvent; this forms a solid coating film when the solvent evaporates, and the film can re-dissolve in the solvent again. Classic nitrocellulose lacquers fall into this category, as do non-grain raising stains composed of dyes dissolved in solvent. Latex paint is a water-based dispersion of sub-micrometer (µm) polymer particles. The term "latex" in the context of paint simply means an aqueous dispersion; latex rubber is usually not a paint ingredient. Latex paints cure by a process called coalescence where first the water, and then the trace, or coalescing, solvent evaporate and draw together and soften the latex binder particles together and fuse them together into irreversibly bound networked structures, so that the paint will not re-dissolve in the solvent/water that originally carried it. Residual surfactants in the paint as well as hydrolytic effects with some polymers can cause the paint to remain susceptible to softening and, over time, degradation by water.

Paints that cure by oxidative cross-linking are generally single package coatings so that when applied, the exposure to oxygen in the air starts a process that cross-links and polymerises the binder component. Classic alkyd enamels fall into this category.

Paints that cure by catalysed polymerisation are generally two package coatings that polymerise by way of a chemical reaction initiated by mixing resin and hardener, and which cure by forming a hard plastic-like structure. Depending on composition they may need to dry first, by evaporation of the solvent. Examples of paints that cure by catalysed polymerisation include epoxy- and polyurethane paints.

Still other coating films are formed by cooling of the binder. For example, encaustic or wax paints are liquid when warm, and harden upon cooling. Often, they can re-soften and/or liquify if reheated.

Environmental requirements can restrict the use of volatile organic compounds, and alternative means of curing have been developed, particularly for industrial purposes. In UV-curing paints, the solvent is evaporated first, and hardening is then initiated by ultraviolet light. In powder coatings there is little or no solvent, and flow (film) and cure are produced by heating of the substrate after application of the dry powder.

Thus, formation of the film may be caused by evaporation of a liquid component from the composition, cross-linking of appropriate auxiliaries in the composition, drying of a liquid composition, etc. or by a combination of these causes. Depending on the composition used to form the film, the film may be immediately visible, e.g. when the composition comprises pigments or dyes, or the film may be barely visible.

Thorough descriptions of coating compositions and methods known from the prior art are given in Bodo Muller and Ulrich Poth, "Coatings Formulation", Vincentz Network, Zeno W. Wicks, Jr., Frank N. Jones, S. Peter Pappas, and Douglas A. Wicks, "Organic Coatings: Science and Technology" (ISBN 978 3878 70177 4), 3rd Ed. Wiley - Interscience (ISBN 978 0471 69806 7) and Artur Goldschmidt and Hans-Joachim Streitberger, "BASF Handbook on Basics of Coating", Vincentz Network, (ISBN 978 3878 70798 1).

### Examples

### Example 1

Three separate liquid components were prepared. The first component was prepared by mixing 2 g triblock copolymer of poly(ethylene oxide)₇₆-poly(propylene oxide)₂₉-poly(ethylene oxide)₇₆ (EO₇₆-PO₂₉-EO₇₆) and 170 ml 0.14 M aqueous HCl using agitation to obtain an emulsion. The second component was prepared by dissolving 2,0 g 3-iodo-2-propynyl butylcarbamate (IPBC) in 32 ml ethanol (99.9%) and the third component was prepared by adding 5 ml sodium silicate solution (Na₂Si₃O₇) to 15 ml miliQ water.

The particles were prepared by adding the second component slowly during 2 minutes to the first component during agitation to form a milky slurry. Subsequently, component 3 was added during 15 minutes with vigorous agitation. The pH was adjusted to 5.6 with 1 M NaOH. After 30 min the particles were filtered and washed by 600 ml miliQ water. The particles were stored until use in a small amount of water to make a slurry.

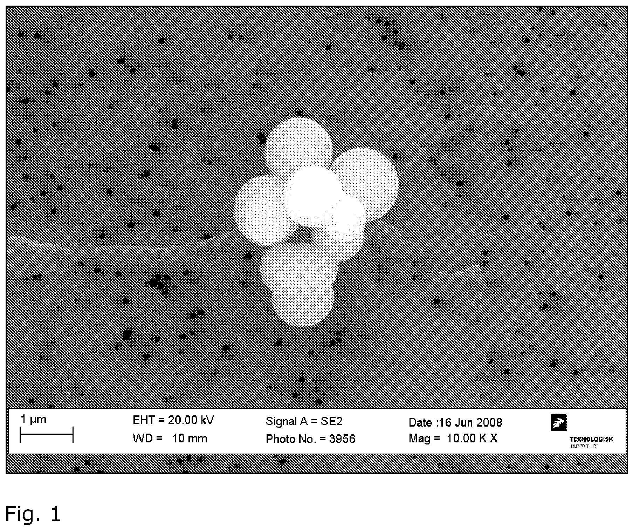

The particles were analysed with high-resolution SEM, and an exemplary SEM micrograph is given in Fig. 1. Fig. 1 shows the particles as single or aggregated silica particles of approximately 1 µm diameter.

### Example 2

The particles were prepared as described in example 1, however after the adjustment of the pH the particles were aged for 3 hours before filtration and subsequent washing.

### Example 3

The particles were prepared as described in example 1, however after the adjustment of the pH the particles was aged for 18 hours before filtration and subsequent washing.

### Example 4

The particles were prepared as described in example 1, however only 10 ml of the third component was used for the preparation of the particles.

### Example 5

The particles were prepared as described in example 1, however 25 ml of the third component was used for the preparation of the particles.

### Example 6

The particles were prepared as disclosed in example 1, however the second component was prepared by dissolving 1.0 g IPBC and 1.0 g 1,3,5-trimethyl benzene (TMB) in 32 ml ethanol (99.9%).

### Example 7

The particles prepared in accordance with examples 1 and 6 were separately mixed with white Dyrup Bondex Topcoat (without biocide) to obtain a total content of IPBC of 0.3%. The paints were applied to 12 mm diameter wood discs.

The painted discs were exposed to UV-A in 250 hr. The UV light was applied to the painted wood discs in a cyclus varying between 4 hours of exposure to UV light at 60°C at a relative humidity of 10% followed by 4 hours without UV light at 50°C but at a relative humidity of 100%.

Spores of fungi (a mixture representing several commonly occurring wood-degrading filamentous fungi) were grown in a malt extract agar (MEA) Petri dish. The painted tree discs were placed on the Petri disc for 72 hr at 24 degree Celsius. The results show that only the paint containing the particles according to example 1 has a fungicidal effect, while the paint containing TMB (example 6) was without detectable effect.

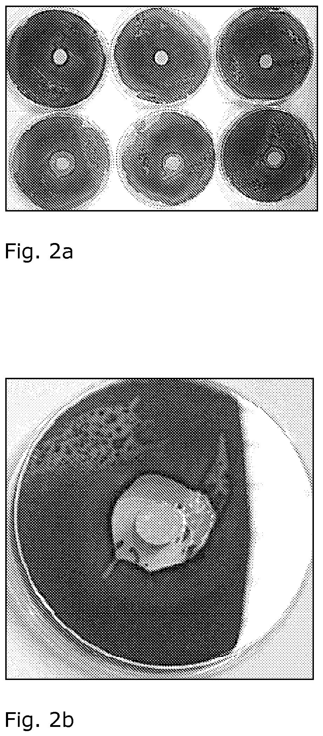

Petri dishes with wood discs treated with particles according to Example 1 are depicted in Fig. 2a as an image recorded after the experiment. For comparison Fig. 2b shows the effect of particles of Example 1 not exposed to UV light. In both cases the growth of the fungi is inhibited by the presence of the IPBC-loaded particles in the paint. The prolonged exposure to UV light did not completely degrade the protective effect of IPBC illustrating the advantage of the controlled release particles in shielding the biocide from the UV-light.

### Example 8

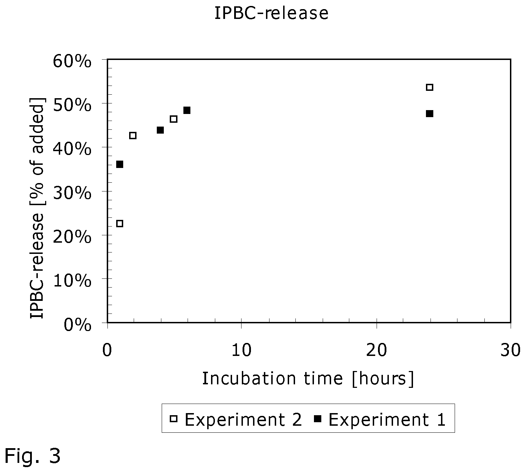

Particles of example 1 and 6 were suspended in water for up to 24 hrs, and the leaching of IPBC was measured. Thus, particles prepared using TMB ("Experiment 1") and particles prepared without TMB ("Experiment 2") were tested. In a typical experiment aliquots of particles were suspended in 500 mL or 1000 mL distilled water at a particle concentration of between approximately 30 and 70 mg/L, and samples were analysed for release of IPBC after 1, 2, 4, 5, 6 or 24 hours. During the experiment the particle suspensions were stirred. Samples were analysed in duplicate, and the particle content of each sample was measured. The result of the analysis of release of IPBC is illustrated in Fig. 3 showing the release as a percentage of the total IPBC added; in Experiment 1 the IPBC load was about 50 mg/g particles, and in Experiment 2 the load was about 170 mg/g particles.

As seen from Fig. 3, the release of IPBC was sustained. The release of IPBC appeared to follow a kinetic model similar to the Michaëlis-Menten type seen for enzymatic reactions. However, no more than up to approximately 50% of the biocide was released to the aqueous environment when the apparent equilibrium was reached, and therefore a significant proportion of the total amount of IPBC was retained in the particles for later release. In comparison, 5 hours of incubation of the particles in methanol released up to about 80% of the IPBC, illustrating how the particles provided a decrease in the release of the biocide into the medium. Importantly, it is noted that the absence of TMB in the manufacture of the particles did not appear to have an effect on the particles when compared to particles prepared using TMB.

Thus, the microparticles of the invention provides controlled release of a biocide even when challenged with an aqueous environment. Moreover, functional biocide particles could be manufactured without the use of TMB.

### Example 9

The scaleability of the particle preparation was examined by repeating the procedure of Example 1 at a 10-fold increased scale. In order to ensure uniform and reproducible addition of solutions of biocide and silicate these were added using a peristaltic pump. Stirring was performed using a more powerful stirrer operating at 500-700 rpm.

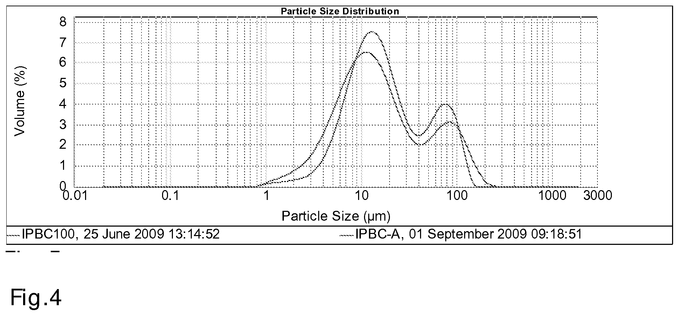

The particle size distributions were analysed using a Malvern Zetasizer (Malvern Instruments), and that of the particles prepared at the increased scale is compared to that of particles prepared at the smaller scale in Fig.4. It is seen from Fig.4 that upscaling of the preparation did not significantly affect the size and size distribution of the prepared particles. It was confirmed by observation with light and electron microscopy that the particles were not morphologically different between the two batches.

Thus, it is concluded that the preparation is readily scaleable.

### Example 10

Field tests were conducted by applying test paints (based on Dyrup Bondex Topcoat) to wooden samples placed outdoors and observing the effects of the paints after seven months. The paints contained differently prepared IPBC-containing biocide microparticles or free IPBC. Some paints also contained a UV-absorber (Tinuvin). For comparison paints were also prepared with microparticles with no biocide, or IPBC was added to the paint without being formulated with microparticles, and as a control paints were used to which neither biocide, nor microparticles were added. The paint formulations and the results are given in Table 1.

**Table 1**

| Sample | Particles | Free IPBC | Tinuvin | Overall result | Cracks | Flaking | Gloss | Growth |
|---|---|---|---|---|---|---|---|---|
| A: Commercial bondex | - | - | - | 1.0 | 0 | 0 | 16.6 | 0 |
| B: Topcoat | - | - | - | 1.3 | 0 | 0 | 14 | 0 |
| C: Topcoat | - | +* | - | 1.0 | 0 | 0 | 18 | 0 |
| D: Topcoat | - | - | - | 1.3 | 0.5 | 0 | 16 | 0 |
| E: Topcoat | 10 ml Si, ½ t | - | - | 1.0 | 0 | 0 | 13.9 | 0 |
| F: Topcoat | 20 ml Si, ½ t | - | - | 1.0 | 0 | 0 | 15.7 | 0 |
| G: Topcoat | 25 ml Si, ½ t | - | - | 1.0 | 0 | 0 | 14.8 | 0 |
| H: Topcoat | 10 ml Si, 3 t | - | - | 2.0 | 2 | 0 | 17.6 | 0 |
| I: Topcoat | 20 ml Si, 3t | - | - | 2.3 | 2.5 | 0 | 15.8 | 0 |
| J: Topcoat | 25 ml Si, 3t | - | - | 1.3 | 0.5 | 0 | 13.5 | 0 |
| K: Topcoat | 10 ml Si, 19 t | - | - | 1.0 | 0 | 0 | 12.7 | 0 |
| L: Topcoat | 20 ml Si, 19 t | - | - | 1.0 | 0 | 0 | 12.1 | 0 |
| M: Topcoat | 25 ml Si, 19t | - | - | 1.0 | 0 | 0 | 9.3 | 0 |
| N: Topcoat | 25 ml, ½t | - | 2% | 1.0 | 0 | 0 | 11.1 | 0 |
| O: Topcoat | 25 ml, ½ t | - | 4% | 1.0 | 0 | 0 | 11.8 | 0 |
| P: Topcoat | 20 ml, 3t | - | 2% | 1.0 | 0 | 0 | 11.6 | 0 |
| Q: Topcoat | 20 ml, 3t | - | 4% | 1.5 | 1 | 0 | 9.9 | 0 |
| R: Topcoat | 25 ml, 3 t | - | 2% | 1.0 | 0 | 0 | 12.2 | 0 |
| S: Topcoat | 25 ml, 3 t | - | 4% | 1.0 | 0 | 0 | 8.3 | 0 |
| T: Topcoat | 20 ml, 3t | + | - | 1.0 | 0 | 0 | 16 | 0 |
| U: Topcoat | 25 ml, 3t | + | - | 1.3 | 0.5 | 0 | 16 | 0 |
| X: Topcoat | 20 ml, 19t | + | - | 1.0 | 0 | 0 | 16 | 0 |

| | | | | | | | | |
|---|---|---|---|---|---|---|---|---|
| 0.3% IPBC i Texanol | | | | | | | | |

The results obtained for the different test paints, as presented in Table 1, were obtained by evaluating according to the scale set out in Table 2.

**Table 2**

| Rating | Intensity of change | Size of cracks | Flaked area (%) | Growth area (%) |
|---|---|---|---|---|
| 0 | Unchanged. No perceptible change | not visible under x 10 magnification | 0 | 0 |
| 1 | Very slight. Just perceptible change | only visible under magnification up to x 10 | 0.1 | 0.1 |
| 2 | Slight. Clearly perceptible change | just visible with normal corrected vision | 0.3 | 0.3 |
| 3 | Moderate. Very clearly perceptible change | clearly visible with normal corrected vision | 1 | 1 |
| 4 | Considerrable. Pronounced change. | large cracks generally up to 1 mm wide | 3 | 3 |
| 5 | Severe. Intense change. | very large cracks generally more than 1 mm wide | 15 | 15 |

In general, the test paints performed as well as the current commercial paints. In particular, the presence of silica microparticles according to the invention (with IPBC as the fungicidal biocide) prevented growth on the wooden samples, and the presence of the microparticles did not significantly affect the appearance of the paint on the samples. The samples were observed over a period of only seven months which is not sufficient to fully appreciate the long term effect of providing the biocide in microparticles allowing controlled release. It is especially expected that the microparticles will provide a long term effect to prevent degradation of the biocide caused by UV-light from the sun.

Further observation of the samples will reveal the onset of (fungal) growth for each type of paint and thereby demonstrate the long term effect of the microparticles of the invention.

### Example 11

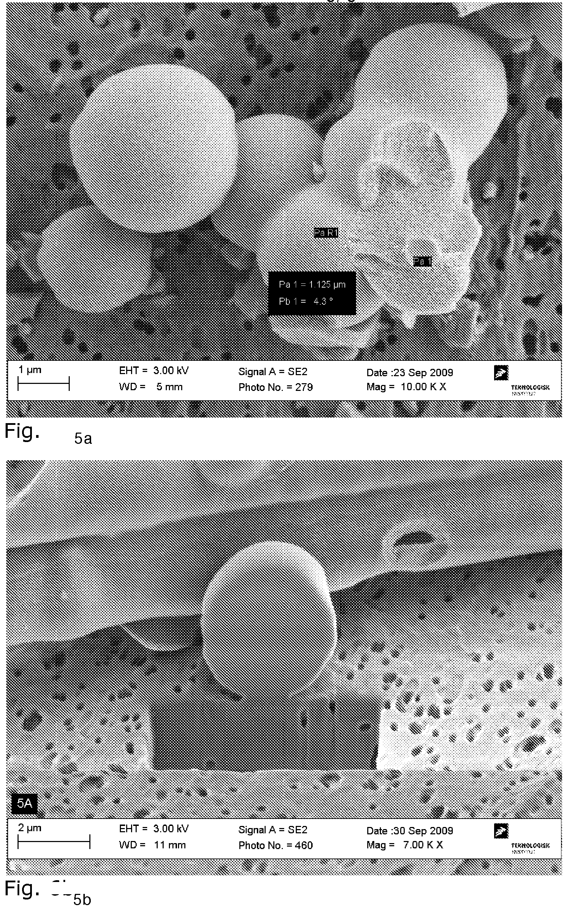

Biocide particles of the invention ("microparticles") were subjected to different analyses to show the cross-section of the particles. A batch of microparticles prepared according to Example 1 were suspended in water and disrupted in a French press. The disrupted particles were analysed using a scanning electron microscope (SEM); the results are shown in Fig. 5a. Fig.5a shows that the disrupted particle had a porous shell surrounding a hollow core (labelled "Pa 1").

Another batch of microparticles were analysed using a focused ion beam-SEM (FIB-SEM). The microparticles were placed on a substrate plate for the FIB-SEM and observed until an appropriate particle was located. This particle was then cut using the Ga⁺-ion beam. The cross-section of the particle as observed using SEM is depicted in Fig. 5b. Fig.5b shows that the cross-section of the particle was uniform.

## Claims

1. A method for the preparation of biocide microparticles, the method comprising:
- providing an aqueous solution of a surfactant;
- providing a homogeneous mixture of a water-miscible organic solvent, a hydrophobic biocide, and optionally a water-immiscible apolar solvent;
- forming an oil-in-water emulsion of the mixture and the aqueous solution of a surfactant;
- mixing an aqueous solution of a ceramic precursor into the emulsion;
- optionally adjusting the pH of the emulsion containing the ceramic precursor to a pH-value below 7; and
- aging the emulsion containing the ceramic precursor.

2. The method according to claim 1, wherein the ceramic precursor is an aqueous mixture of SiO₂ and Na₂O, or a soluble silicate.

3. The method according to claim 1 or 2, wherein the particle diameter is 0.1 to 10 µm.

4. The method according to any one of claims 1 to 3, wherein the biocide is a fungicide, algaecide, insecticide, termiticide, and/or bactericide.

5. A method according to any one of claims 1 to 4, wherein the surfactant is selected among the group consisting of a block copolymer having residues of ethylene oxide and propylene oxide.

6. A method according to claim 5, wherein the surfactant is a tri block copolymer of poly-(ethylene oxide)-poly-(propylene oxide)-poly-(ethylene oxide).

7. A method according to any of claims 1 to 6, wherein the surfactant is in a concentration of 1-10%(w/w).

8. A method according to any of claims 1 to 7, wherein the water-immiscible apolar solvent, if present is selected among the group consisting of aromatic, aliphatic or cycloaliphatic solvents, for example 1,3,5-trimethyl benzene (TMB).

9. A method according to any of claims 1 to 8, wherein the water-immiscible apolar solvent constitutes up to 10%(w/w) of the water-miscible organic solvent.

10. A method according to any of claims 1 to 9, wherein when a water-immiscible apolar solvent is present, the biocide is present in an amount of at least 30%(w/w) of the amount of the water-immiscible apolar solvent.

11. A method according to any of claims 1 to 10, wherein the water-miscible organic solvent is selected from the group comprising alcohols, ethers, ester, ketones, and aldehydes.

12. A method according to claim 11, wherein the water-miscible organic solvent is water-free ethanol, such as of a 99.9% concentration.

13. A method according to any of claims 1 to 12, wherein the pH is adjusted to about 5.2.

14. A method according to any of claims 1 to 13, wherein the pH is controlled.

15. A method according to any of claims 1 to 14, wherein the aging time is from 5 minutes to 48 hours.

## Patentansprüche

1. Verfahren zur Herstellung von Biozid-Mikropartikeln, das Folgendes umfasst:
- Bereitstellen einer wässrigen Lösung eines Tensids;
- Bereitstellen eines homogenen Gemischs aus einem mit Wasser mischbaren organischen Lösungsmittel, einem hydrophoben Biozid und gegebenenfalls einem mit Wasser unmischbaren apolaren Lösungsmittel;
- Bilden einer Öl-in-Wasser-Emulsion des Gemischs und der wässrigen Lösung eines Tensids;
- Mischen einer wässrigen Lösung einer keramischen Vorstufe in die Emulsion;
- gegebenenfalls Einstellen des pH der die keramische Vorstufe enthaltenden Emulsion auf einen pH-Wert unter 7; und
- Altern der die keramische Vorstufe enthaltenden Emulsion.

2. Verfahren nach Anspruch 1, wobei es sich bei der keramischen Vorstufe um ein wässriges Gemisch von SiO₂ und Na₂O oder ein lösliches Silicat handelt.

3. Verfahren nach Anspruch 1 oder 2, wobei der Partikeldurchmesser 0,1 bis 10 µm beträgt.

4. Verfahren nach einem der Ansprüche 1 bis 3, wobei es sich bei dem Biozid um ein Fungizid, Algezid, Insektizid, Termitizid und/oder Bakterizid handelt.

5. Verfahren nach einem der Ansprüche 1 bis 4, wobei das Tensid unter der aus einem Blockcopolymer mit Resten von Ethylenoxid und Propylenoxid bestehenden Gruppe ausgewählt ist.

6. Verfahren nach Anspruch 5, wobei es sich bei dem Tensid um ein Triblockcopolymer von Polyethylenoxid-Polypropylenoxid-Polyethylenoxid handelt.

7. Verfahren nach einem der Ansprüche 1 bis 6, wobei das Tensid in einer Konzentration von 1-10 Gew-% vorliegt.

8. Verfahren nach einem der Ansprüche 1 bis 7, wobei das mit Wasser unmischbare apolare Lösungsmittel, falls vorhanden, unter der aus aromatischen, aliphatischen oder cycloaliphatischen Lösungsmitteln, zum Beispiel 1,3,5-Trimethylbenzol (TMB), bestehenden Gruppe ausgewählt ist.

9. Verfahren nach einem der Ansprüche 1 bis 8, wobei das mit Wasser unmischbare apolare Lösungsmittel bis zu 10 Gew.-% des mit Wasser mischbaren organischen Lösungsmittels ausmacht.

10. Verfahren nach einem der Ansprüche 1 bis 9, wobei bei Vorliegen eines mit Wasser unmischbaren apolaren Lösungsmittels das Biozid in einer Menge von wenigstens 30 Gew.-% der Menge des mit Wasser unmischbaren apolaren Lösungsmittels vorliegt.

11. Verfahren nach einem der Ansprüche 1 bis 10, wobei das mit Wasser mischbare organische Lösungsmittel aus der Alkohole, Ether, Ester, Ketone und Aldehyde umfassenden Gruppe ausgewählt ist.

12. Verfahren nach Anspruch 11, wobei es sich bei dem mit Wasser mischbaren organischen Lösungsmittel um wasserfreies Ethanol, wie etwa in einer Konzentration von 99,9%, handelt.

13. Verfahren nach einem der Ansprüche 1 bis 12, wobei der pH-Wert auf etwa 5,2 eingestellt wird.

14. Verfahren nach einem der Ansprüche 1 bis 13, wobei der pH kontrolliert wird.

15. Verfahren nach einem der Ansprüche 1 bis 14, wobei die Alterungszeit 5 Minuten bis 48 Stunden beträgt.

## Revendications

1. Méthode de préparation de microparticules de biocide, la méthode comprenant :
- la fourniture d'une solution aqueuse d'un agent tensioactif ;
- la fourniture d'un mélange homogène d'un solvant organique miscible avec l'eau, d'un biocide hydrophobe, et éventuellement d'un solvant apolaire immiscible avec l'eau ;
- la formation d'une émulsion huile-dans-eau du mélange et de la solution aqueuse d'un agent tensioactif ;
- le mélange d'une solution aqueuse d'un précurseur de céramique dans l'émulsion ;
- éventuellement l'ajustement du pH de l'émulsion contenant le précurseur de céramique jusqu'à une valeur de pH inférieure à 7 ; et
- la maturation de l'émulsion contenant le précurseur de céramique.

2. Méthode selon la revendication 1, dans laquelle le précurseur de céramique est un mélange aqueux de SiO₂ et de Na₂O, ou un silicate soluble.

3. Méthode selon la revendication 1 ou 2, dans laquelle le diamètre de particule va de 0,1 à 10 µm.

4. Méthode selon l'une quelconque des revendications 1 à 3, dans laquelle le biocide est un fongicide, un algicide, un insecticide, un termiticide et/ou un bactéricide.

5. Méthode selon l'une quelconque des revendications 1 à 4, dans laquelle l'agent tensioactif est choisi dans le groupe constitué par un copolymère bloc comportant des restes d'oxyde d'éthylène et d'oxyde de propylène.

6. Méthode selon la revendication 5, dans laquelle l'agent tensioactif est un copolymère tri-bloc de poly(oxyde d'éthylène)-poly(oxyde de propylène)-poly(oxyde d'éthylène).

7. Méthode selon l'une quelconque des revendications 1 à 6, dans laquelle l'agent tensioactif se trouve selon une concentration de 1-10% (p/p).

8. Méthode selon l'une quelconque des revendications 1 à 7, dans laquelle le solvant apolaire immiscible avec l'eau, s'il est présent, est choisi dans le groupe constitué par les solvants aromatiques, aliphatiques ou cycloaliphatiques, par exemple le 1,3,5-triméthylbenzène (TMB).

9. Méthode selon l'une quelconque des revendications 1 à 8, dans laquelle le solvant apolaire immiscible avec l'eau constitue jusqu'à 10% (p/p) du solvant organique miscible avec l'eau.

10. Méthode selon l'une quelconque des revendications 1 à 9, dans laquelle, lorsqu'un solvant apolaire immiscible avec l'eau est présent, le biocide est présent selon une quantité d'au moins 30% (p/p) de la quantité du solvant apolaire immiscible avec l'eau.

11. Méthode selon l'une quelconque des revendications 1 à 10, dans laquelle le solvant organique miscible avec l'eau est choisi dans le groupe constitué par les alcools, les éthers, un ester, les cétones et les aldéhydes.

12. Méthode selon la revendication 11, dans laquelle le solvant organique miscible avec l'eau est constitué d'éthanol dépourvu d'eau, tel que selon une concentration de 99,9%.

13. Méthode selon l'une quelconque des revendications 1 à 12, dans laquelle le pH est ajusté jusqu'à environ 5,2.

14. Méthode selon l'une quelconque des revendications 1 à 13, dans laquelle le pH est contrôlé.

15. Méthode selon l'une quelconque des revendications 1 à 14, dans laquelle le temps de maturation va de 5 minutes à 48 heures.
